# EUROPÄISCHE PATENTSCHRIFT

(11) **EP 0 734 807 B1**
(45) Veröffentlichungstag und Bekanntmachung des Hinweises auf die Patenterteilung: **26.11.1997**
(21) Anmeldenummer: 95112105.2
(22) Anmeldetag: 01.08.1995
(51) Int. Cl.: B23K 9/04, B23K 37/02

(54) **Verfahren und Vorrichtung zur Beseitigung eines Gussfehlers an der Aussenoberfläche eines Gussteils aus Gusseisen**
Method, apparatus to suppress the defects of the cast iron surface elements
Méthode, appareil permettant de supprimer des défauts existants en partie supérieure d'éléments de fonte

(30) Priorität: 28.03.1995 DE 19511302; 02.06.1995 DE 19520323
(43) Veröffentlichungstag der Anmeldung: 02.10.1996
(73) Patentinhaber: Siempelkamp Guss- und Anlagentechnik Holding GmbH & Co., 47803 Krefeld (DE)
(72) Erfinder: Sappok, Manfred, Dr., D-47918 St. Tönis (DE); Kleinkröger, Wolfgang, D-47802 Krefeld (DE); Sapahpour, Mohammad, D-45468 Mühlheim (DE)
(74) Vertreter: Honke, Manfred, Dr.-Ing.

(56) Entgegenhaltungen:
- DE-A- 1 440 418
- FR-A- 2 321 978
- US-A- 4 110 596
- PATENT ABSTRACTS OF JAPAN vol. 10, no. 372 (M-544) [2429] , 11.Dezember 1986 & JP-A-61 165292 (MITSUBISHI HEAVY IND LTD), 25.Juli 1986,

## Beschreibung

Die Erfindung betrifft ein Verfahren zur Beseitigung eines Gußfehlers an der Außenoberfläche eines Gußteils aus Gußeisen im Rahmen des Fertigungsschweißens bzw. des Reparaturschweißens, wobei der Bereich des Gußfehlers zu einer Vertiefung ausgekammert und in dieses Schweißgut eingebracht wird. Bei den Gußteilen mag es sich um schwere Maschinenteile handeln, z. B. um Maschinengestelle, Motorengehäuse und dergleichen, aber auch um Abschirmtransport- und/oder Lagerbehälter, die zur Aufnahme von bestrahlten Brennelementen oder anderer radioaktiver Substanzen bestimmt und eingerichtet sind. An solche Gußteile werden hohe Anforderungen gestellt. Gußfehler müssen so beseitigt werden, daß die Fertigungsschweißung oder Reparaturschweißung auch im Bereich des Übergangs zum Grundwerkstoff keine Schwachstelle darstellt. - Fertigungsschweißungen bezeichnet Schweißungen zur Beseitigung von Gußfehlern, wie Lunkern, Sandeinschüssen, Rissen sowie aus unvollständigen Formfüllungen an sonst funktionsfähigen Gußteilen. Reparatur- oder Instandsetzungsschweißungen bezeichnet die Reparatur von Fehlern am Gußteil, die im betrieblichen Einsatz oder aus anderen Gründen entstanden sind. - Gußeisen bezeichnet im Rahmen der Erfindung graphitisches Gußeisen, aber insbesondere auch sphärolitisches Gußeisen.

Im Rahmen der bekannten Maßnahmen zur Beseitigung eines Gußfehlers an der Außenoberfläche eines Gußteiles aus Gußeisen wird mit elektrischen Schweißanlagen und Schweißelektroden in Form von Gußeisenelektroden gearbeitet, wobei die Schweißparameter einstellbar sind. Die Gußeisenelektrode wird in der Vertiefung, die durch die Auskammerung des Gußfehlers entstanden ist, von Hand durch einen erfahrenen Schweißer geführt. Das stellt nicht sicher, daß die fertige Schweißung allen Anforderungen genügt.

Im übrigen sind elektrische Schweißanlagen bekannt, die zum Schneiden, d.h. zum Trennschweißen, eingesetzt werden und in bezug auf Elektrodenführung und Energiezuführung automatisch arbeiten (vgl. z.B. die Firmendruckschrift "Arcair" der Arcair Co. in Lancaster, Ohio - USA, Rev. 11-85). Die Elektrode ist von Blasluft umströmt, die die sich bildende Schmelze abbläst. Mit solchen Schweißautomaten kann jedoch bisher bei der Beseitigung eines Gußfehlers an der Außenoberfläche eines Gußteils aus Gußeisen nicht gearbeitet werden.

Der Erfindung liegt das technische Problem zugrunde, zur Beseitigung von Gußfehlern an Gußteilen aus Gußeisen Fertigungsschweißungen durchzuführen, die hohen Qualitätsbeanspruchungen genügen und weitgehend automatisch durchgeführt werden können. Der Erfindung liegt fernerhin das technische Problem zugrunde, eine Vorrichtung anzugeben, die zur Durchführung eines solchen Verfahrens besonders geeignet ist.

Zur Lösung dieses technischen Problems ist Gegenstand der Erfindung ein Verfahren zur Beseitigung eines Gußfehlers an der Außenoberfläche eines Gußteils aus Gußeisen durch Fertigungsschweißen oder Reparaturschweißen, wobei der Bereich des Gußfehlers zu einer Vertiefung ausgekammert und in dieses Schweißgut eingebracht wird, - mit den Verfahrensschritten
1.1) das Gußteil wird zumindest im Bereich des ausgekammerten Gußfehlers auf eine Vorwärmtemperatur von 400 bis 700 °C erwärmt,
1.2) die Fertigungsschweißung oder Reparaturschweißung wird als artgleiche Schweißung in Form einer Lichtbogenschweißung unter Verwendung einer Gußeisenelektrode durchgeführt,
1.3) das Gußteil wird mit dem Gußfehler nach oben unter einer Krananlage mit aufundniedergehendem, hängendem Hebezeug angeordnet,
1.4) zur Führung der Gußeisenelektrode wird ein elektrisch angetriebener Elektrodenförderer verwendet, der die Gußeisenelektrode oder einen koaxial zur Gußeisenelektrode angeordneten und mit dieser verbundenen Verlängerungsstab in Achsrichtung der Gußeisenelektrode aufundnieder bewegt,
1.5) die Gußeisenelektrode wird mit der Krananlage bis in den Bereich des ausgekammerten Gußfehlers bewegt, so daß das Ende der Gußeisenelektrode in die durch die Auskammerung des Gußfehlers gebildete Vertiefung eintaucht,
1.6) der Lichtbogen wird gezündet und die Gußeisenelektrode wird nach Maßgabe der Längenänderung des Lichtbogens über den Elektrodenförderer automatisch nachgeführt,
1.7) beim Schweißvorgang bewegt eine Bedienungsperson, mit Hilfe einer Führungsstange die Gußeisenelektrode pendelnd,
wobei die Vorwärmtemperatur und die Energiezufuhr durch den Schweißvorgang so eingerichtet werden, daß ein ausreichend großes Schmelzbad erzeugt wird und eine das artgleiche Schweißen sicherstellende Abkühlung erfolgt. Gegenstand der Erfindung ist weiterhin eine Vorrichtung gemäß dem Anspruch 5. - Artgleiche Schweißung bedeutet im Rahmen der Erfindung, daß die beim Schweißvorgang entstehende Legierung von der gleichen Art ist, wie die Legierung des Gußteils. Die Legierungszusammensetzung soll mit der des Gußteils möglichst genau übereinstimmen. Dazu kann die Legierung der Gußeisenelektrode entsprechend eingestellt werden, wobei sich ein Kohlenstoffüberschuß empfiehlt. Die Gußeisenelektrode kann zu dem angegebenen Zweck aber auch eine entsprechende Umhüllung aufweisen, beispielsweise eine Umhüllung aus hauptsächlich Kohlenstoff und Silizium, oder einen entsprechenden Fülldraht. Zusatzstoffe, wie Schlackenbildner, können beigegeben werden. Handelt es sich um Gußteile aus sphärolitischem Gußeisen, so wird man auch die zur Kristallisation von Sphäroguß notwendigen Elemente beigeben.

Im Rahmen des erfindungsgemäßen Verfahrens wird das Schmelzbad gegen den Einfluß der Atmosphäre vorzugsweise lediglich durch die sich bildende Schlacke und/oder sich bildende Gase geschützt, die von der Gußeisenelektrode und/oder deren Umhüllung und/oder einem Fülldraht der Gußeisenelektrode selbst stammen. Nach bevorzugter Ausführungsform der Erfindung wird mit einer Gußeisenelektrode gearbeitet, die mit einer Leistung wie ein Fugenhobel, oder sogar mit höherer Leistung, betrieben wird, wobei diese Gußeisenelektrode jedoch abblasluftfrei betrieben wird. Eine solche Gußeisenelektrode besitzt zum Beispiel einen Durchmesser von etwa 16 mm, der Schweißbetrieb wird zum Beispiel mit 800 bis 1200 Ampere durchgeführt. Die Leistung und damit die Stromstärke hängen im übrigen vom Durchmesser der Gußeisenelektrode und von der Lichtbogenlänge ab. Von besonderer Bedeutung ist ein weiterer Vorschlag der Erfindung, der dadurch gekennzeichnet ist, daß eine automatische Trennschweißeinrichtung nach Art eines Fugenhobels mit geführtem Elektrodenkopf verwendet wird, die mit Lichtbogenlängenregelung arbeitet und an sich eine Abblaslufteinrichtung für die sich bildende Schmelze aufweist, mit der Maßgabe, daß in den Elektrodenkopf die Gußeisenelektrode eingesetzt wird, daß der Elektrodenkopf in die Krananlage eingehängt und abblasluftfrei betrieben wird und daß die Gußeisenelektrode nach Maßgabe des Merkmals 1.7) bewegt wird.

Elektrodenförderer, wie sie die Erfindung einsetzt, und die auch als Elektrodenvorschubgeräte bezeichnet werden, sind bekannt, z.B. als sogenannte Fugenhobel. Fugenhobel werden üblicherweise im Schiffsbau zum Trennen von Schiffsblechen eingesetzt. Als "Hobel" wird eine Kohlenstoffelektrode in einen Brennerkopf eingesetzt, deren Dicke nach Maßgabe der Fugenbreite eingerichtet ist. Um die Austrittsöffnung der Elektrode am Brennerkopf befinden sich Druckluftdüsen in kreisförmiger Anordnung. Sie werden mit Druckluft versorgt. Die gesamte Vorrichtung befindet sich auf einem Schlitten, der über eine Kontrolleinrichtung mit vorgegebener Vorschubgeschwindigkeit bewegt wird. Um Fugen zu "hobeln", anders ausgedrückt, Bleche zu trennen, wird das Gerät auf das zu bearbeitende Blech aufgesetzt. Über die Kontrolleinrichtung wird der Lichtbogenabstand geregelt und konstant gehalten. Im Brennfleck des Lichtbogens schmilzt das Blech auf und das flüssige Material wird durch die Druckluft aus der Fuge herausgeschleudert. Erfindungsgemäß werden von einem solchen Fugenhobel lediglich der Elektrodenförderer mit seiner Automatik und der sogenannte Brennerkopf benötigt.

Die Erfindung geht von der Erkenntnis aus, daß auch zur Beseitigung von Gußfehlern an der Außenoberfläche eines Gußteils aus Gußeisen auf einfache Weise automatisch gearbeitet werden kann, wenn die Merkmale 1.1) bis 1.5) verwirklicht werden und die Gußeisenelektrode gemäß Merkmal 1.6) in ihrer Längsrichtung automatisch geführt wird. Zwar würde eine vollautomatische Beseitigung eines Gußfehlers an der Außenoberfläche eines Gußteils auch eine automatische Steuerung der Gußeisenelektrode in pendelnder Richtung verlangen, die die Geometrie der durch den ausgekammerten Gußfehler erzeugten Vertiefung berücksichtigt. Das würde jedoch sehr aufwendige steuerungstechnische Maßnahmen verlangen. Erfindungsgemäß erfolgt diese Steuerung der Gußeisenelektrode bzw. des Endes der Gußeisenelektrode in pendelnder Richtung durch die Bedienungsperson der Vorrichtung, die das erfindungsgemäße Verfahren durchführt und mit Augeninspektion arbeitet. Die Richtung der pendelnden Bewegung wird dabei über den Umfang der Auskammerung verändert. Die Bedienungsperson bewegt die Gußeisenelektrode mit Hilfe einer handgeführten Stange.

Überraschenderweise bildet sich bei dem erfindungsgemäßen durch die Kombination der pendelnden Handführung der Gußeisenelektrode mit der automatischen Führung der Gußeisenelektrode nach Maßgabe der verfahrensbedingten Längenänderung des Lichtbogens, bei Verzicht auf Abblasluftzuführung, in der Auskammerung im Bereich des zu beseitigenden Gußfehlers eine Schmelze, die bei störungsfreiem Verbund mit dem Grundwerkstoff des Gußteils artgleich sich monolithisch mit dem Grundwerkstoff vereinigt. Zumeist kann mit einer Zündung, jedenfalls kann mit wenigen Zündstellen gearbeitet werden, so daß auch keine Fehler durch Zündstellenbildung auftreten.

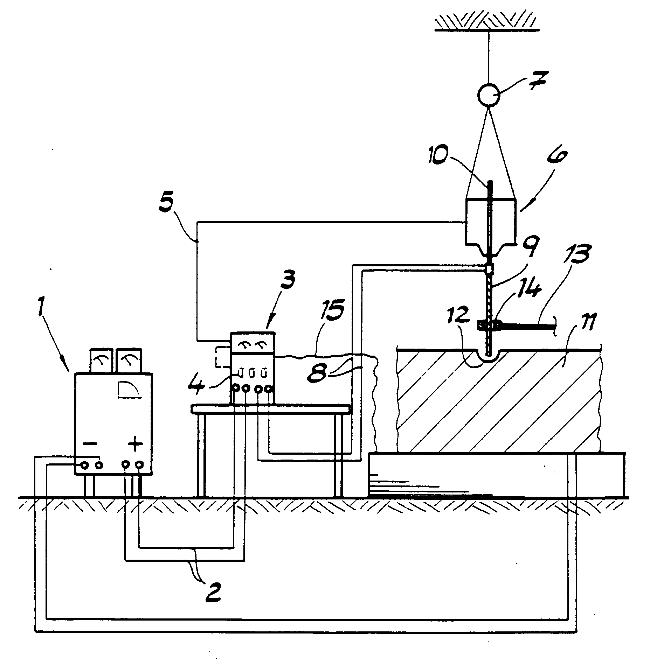

Im folgenden werden die Erfindung und eine für die Durchführung der Erfindung eingerichtete Vorrichtung ausführlicher erläutert. Die einzige Figur zeigt schematisch eine solche Vorrichtung.

In der Figur ist die Schweißeinrichtung dargestellt. Man erkennt einen Schweißgleichrichter 1, der auf bekannte Weise mit einer Stromquelle verbunden ist. Vom Schweißgleichrichter 1 gehen die üblichen Starkstromkabel 2 zu der Kontrolleinrichtung 3, mit der die Schweißparameter einstellbar sind. Es versteht sich, daß die beim Schweißgleichrichter eingezeichnete Polung geändert werden kann. Zweckmäßigerweise wird die Gußeisenelektrode an den Pluspol angeschlossen, also als Anode geschaltet. Die Kontrolleinrichtung 3 ist mit einem sogenannten Kontaktor 4 versehen. Von der Kontrolleinrichtung 3 geht ein Motorkabel 5 zu dem Elektrodenförderer 6, der an dem Hebezeug 7 eines Kranes hängt. Von der Kontrolleinrichtung 3 gehen fernerhin die Starkstromkabel 8 zu der Gußeisenelektrode 9. Im Ausführungsbeispiel ist die Gußeisenelektrode 9 mit einem Verlängerungsstab 10 versehen, der in den Elektrodenförderer 6 eingeführt ist und auf den der Elektrodenförderer 6 einwirkt, so daß mittelbar auch die Gußeisenelektrode 9 in Richtung ihrer Achse bewegt wird. Man erkennt unter der Gußeisenelektrode 9 ein Gußteil 11 mit einem Gußfehler in der Oberfläche. Der Gußfehler wurde ausgekammert und hat eine Vertiefung 12 gebildet. Die Vertiefung 12 findet sich in Achsrichtung unter der Gußeisenelektrode 9. Beim Schweißvorgang wird die Gußeisenelektrode 9, wie beschrieben, automatisch nachgeführt. Sie wird im übrigen in horizontaler Richtung, gleichsam pendelnd, von einer Bedienungsperson bewegt, die eine entsprechende leichte Führungsstange 13, die eine Öse 14 aufweist, durch die die Gußeisenelektrode 9 hindurchgeführt ist, in horizontaler Richtung bewegt. Ein Signalkabel 15 versorgt den Regler der Schweißeinrichtung mit den erforderlichen Informationen, insbesondere für die Regelung der Lichtbogenlänge.

## Patentansprüche

1. Verfahren zur Beseitigung eines Gußfehlers an der Außenoberfläche eines Gußteils (11) aus Gußeisen durch Fertigungsschweißen oder Reparaturschweißen, wobei der Bereich des Gußfehlers zu einer Vertiefung (12) ausgekammert und in dieses Schweißgut eingebracht wird, - mit den Verfahrensschritten
1.1) das Gußteil wird zumindest im Bereich des ausgekammerten Gußfehlers auf eine Vorwärmtemperatur von 400 bis 700 °C erwärmt,
1.2) die Fertigungsschweißung oder Reparaturschweißung wird als artgleiche Schweißung in Form einer Lichtbogenschweißung unter Verwendung einer Gußeisenelektrode (9) durchgeführt,
1.3) das Gußteil (11) wird mit dem Gußfehler nach oben unter einer Krananlage mit aufundniedergehendem, hängendem Hebezeug (7) angeordnet,
1.4) zur Führung der Gußeisenelektrode (9) wird ein elektrisch angetriebener Elektrodenförderer (6) verwendet, der die Gußeisenelektrode (9) oder einen koaxial zur Gußeisenelektrode angeordneten und mit dieser verbundenen Verlängerungsstab (10) in Achsrichtung der Gußeisenelektrode (9) aufundnieder, bewegt,
1.5) die Gußeisenelektrode (9) wird mit der Krananlage bis in den Bereich des ausgekammerten Gußfehlers bewegt, so daß das Ende der Gußeisenelektrode in die durch die Auskammerung des Gußfehlers gebildete Vertiefung (12) eintaucht,
1.6) der Lichtbogen wird gezündet und die Gußeisenelektrode (9) wird nach Maßgabe der Längenänderung des Lichtbogens über den Elektrodenförderer (6) automatisch geführt,
1.7) beim Schweißvorgang bewegt eine Bedienungsperson mit Hilfe einer Führungsstange (13) die Gußeisenelektrode (9) pendelnd,
wobei die Vorwärmtemperatur und die Energiezufuhr durch den Schweißvorgang so eingerichtet werden, daß ein ausreichend großes Schmelzbad erzeugt wird und eine das artgleiche Schweißen sicherstellende Abkühlung erfolgt.

2. Verfahren nach Anspruch 1, wobei das Schmelzebad gegen den Einfluß der Atmosphäre lediglich durch die sich bildende Schlacke und/oder die sich bildenden Gase geschützt wird, die von der Gußeisenelektrode (9) und/oder deren Umhüllung und/oder einem Fülldraht der Gußeisenelektrode selbst stammen.

3. Verfahren nach einem der Ansprüche 1 oder 2, wobei mit einer Gußeisenelektrode (9) gearbeitet wird, die mit der Leistung einer Fugenhobelelektrode, jedoch abblasluftfrei, betrieben wird.

4. Verfahren nach einem der Ansprüche 1 bis 3, wobei eine automatische Trennschweißeinrichtung nach Art eines Fugenhobels mit geführtem Elektrodenkopf verwendet wird, die mit Lichtbogenregelung arbeitet und an sich eine Abblaseinrichtung für die sich bildende Schmelze aufweist, mit der Maßgabe, daß in den Elektrodenkopf die Gußeisenelektrode (9) eingesetzt wird, daß der Elektrodenkopf in die Krananlage eingehängt und abblasluftfrei betrieben wird und daß die Gußeisenelektrode (9) nach Maßgabe des Merkmals 1.7) bewegt wird.

5. Vorrichtung zur Durchführung des Verfahrens nach einem der Ansprüche 1 bis 4 mit Schweißgleichrichter (1), Kontrolleinrichtung (3) und Kontaktor (4) sowie mit einem automatischen, nach Maßgabe der Lichtbogenlänge gesteuerten Elektrodenkopf mit Elektrodenförderer (6) für die Bewegung der Gußeisenelektrode (9) in ihrer Achsrichtung, wobei der Elektrodenkopf am Hebezeug (7) eines Kranes hängt und mit dem Kran in bezug auf die Vertiefung (12), die durch die Auskammerung des Gußfehlers entstanden ist, zustellbar sowie nach Maßgabe der Längenänderung des Lichtbogens über den Elektrodenförderer (6) automatisch nachführbar ist.

## Claims

1. A process for eliminating a casting fault on the outer surface of a cast-iron casting (11) by production welding or repair welding, wherein the region of the casting fault is hollowed out to form a recess (12) and welding material is introduced thereinto, comprising the process steps:
1.1) the casting is heated to a preheating temperature of 400 to 700 °C at least in the region of the hollowed-out casting fault,
1.2) the production welding or repair welding is carried out as a homogeneous weld in the form of an arc weld using a cast-iron electrode (9),
1.3) the casting is disposed with the casting fault upwards beneath a crane installation having a rising and descending suspended hoist (7),
1.4) an electrically driven electrode conveyor (6) is used to guide the cast-iron electrode (9) and moves the latter, or an extension rod (10) disposed coaxially of the cast-iron electrode and connected thereto, up and down in the axial direction of the cast-iron electrode (9),
1.5) the cast-iron electrode (9) is moved by the crane installation into the region of the hollowed-out casting fault so that the end of the cast-iron electrode is immersed in the recess (12) formed by hollowing out the casting fault,
1.6) the arc is struck and the cast-iron electrode (9) is guided automatically by means of the electrode conveyor (6) in accordance with the change of length of the arc,
1.7) during the welding operation an operative uses a guide rod (13) to move the cast-iron electrode (9) with an oscillatory action,
wherein the preheating temperature and the energy supply are so arranged through the welding operation that an adequately large melt is produced and cooling takes place so as to ensure a homogeneous weld.

2. A process according to claim 1, wherein the melt is protected against the influence of the atmosphere solely by the slag forming and/or by the gases forming, such as originate from the cast-iron electrode (9) and/or its covering and/or a filler wire of the cast-iron electrode itself.

3. A process according to claim 1 or 2, wherein the cast-iron electrode (9) used is operated with the output of a flame gouging electrode but without blow-off air.

4. A process according to any one of claims 1 to 3, wherein an automatic parting-off welding device after the style of a gouging torch having a guided electrode head is used, which device operates with arc regulation and has per se a blow-off device for the melt forming, wherein the cast-iron electrode (9) is inserted into the electrode head, wherein the electrode head is attached to the crane installation and is operated without blow-off air and wherein the cast-iron electrode (9) is moved in accordance with feature 1.7).

5. Apparatus for performing the process according to any one of claims 1 to 4 with a welding rectifier (1), control device (3) and contactor (4) and with an automatic electrode head controlled in accordance with the arc length and with an electrode conveyor (6) for moving the cast-iron electrode (9) in its axial direction, wherein the electrode head is suspended from the hoist (7) of a crane and is feedable with the crane relative to the recess (12) formed by hollowing out the casting fault, and is adapted to track automatically by means of the electrode conveyor (6) in accordance with the change of length of the arc.

## Revendications

1. Procédé pour éliminer un défaut de coulée sur la surface extérieure d'une pièce moulée (11) en fonte par soudage de fabrication ou de réparation, la zone du défaut de coulée étant évidée de manière à former un creux (12) dans lequel est introduit le métal d'apport, comprenant les étapes de procédé suivantes :
1.1) la pièce moulée en fonte est portée, au moins dans la région du défaut de coulée évidé à une température de préchauffage de 400 à 700°C,
1.2) le soudage de fabrication ou de réparation est effectué en tant que soudage de même nature sous la forme d'un soudage à l'arc, avec utilisation d'une électrode en fonte (9),
1.3) la pièce moulée en fonte (11) est placée avec le défaut de coulée vers le haut sous une installation de grue avec un engin de levage suspendu montant et descendant (7),
1.4) pour le guidage de l'électrode en fonte (9), on utilise un transporteur d'électrode à entraînement électrique (6) qui déplace l'électrode en fonte (9) ou une baguette de rallonge (10) disposée coaxialement par rapport à l'électrode en fonte et solidaire de celle-ci, vers le haut et vers le bas dans la direction axiale,
1.5) l'électrode en fonte (9) est amenée avec l'installation de grue jusque dans la région du défaut de coulée évidé, de manière que l'extrémité de l'électrode en fonte plonge dans le creux (12) formé par l'évidement du défaut de coulée,
1.6) l'arc électrique est amorcé et l'électrode en fonte (9) est guidée automatiquement, en fonction de la variation de la longueur de l'arc, sur le transporteur d'électrode (6),
1.7) lors de l'opération de soudage, un opérateur confère à l'électrode en fonte (9) un mouvement oscillatoire à l'aide d'une barre de guidage (13),
dans lequel la température de préchauffage et l'amenée d'énergie sont déterminées par le processus de soudage de façon à produire un bain de fusion suffisamment grand et à obtenir un refroidissement assurant le soudage homogène.

2. Procédé selon la revendication 1, dans lequel le bain de fusion n'est protégé contre l'influence atmosphérique que par le laitier en formation et/ou par les gaz produits qui proviennent de l'électrode en fonte (9) et/ou de sa gaine et/ou d'une baguette de remplissage de l'électrode en fonte elle-même.

3. Procédé selon la revendication 1 ou 2, dans lequel on utilise une électrode en fonte (9) qui fonctionne avec la puissance d'une électrode gougeuse, mais sans air de soufflage.

4. Procédé selon l'une des revendications 1 à 3, dans lequel on utilise un dispositif de soudage à écartement automatique à la manière d'un chalumeau gougeur avec tête porte-électrode guidée, qui fonctionne avec une régulation de l'arc et présente en soi un dispositif de soufflage pour la masse fondue produite, avec la caractéristique que dans la tête porte-électrode est insérée l'électrode en fonte (9), que la tête porte-électrode est accrochée dans l'installation de grue et utilisée sans air de soufflage, et que l'électrode en fonte (9) est déplacée conformément à la caractéristique 1.7).

5. Dispositif pour la mise en oeuvre du procédé selon l'une des revendications 1 à 4, avec redresseur de soudage (1), dispositif de contrôle (3) et contacteur (4) ainsi qu'avec une tête porte-électrode automatique commandée en fonction de la longueur de l'arc, avec transporteur d'électrode (6) pour le déplacement de l'électrode en fonte (9) dans le sens axial de celle-ci, dans lequel la tête porte-électrode est suspendue à l'engin de levage (7) d'une grue et peut être positionnée avec la grue par rapport au creux (12) formé par l'évidement du défaut de coulée et ajustée automatiquement en fonction de la variation de la longueur de l'arc par l'intermédiaire du transporteur d'électrode (6).
